(19) **Europäisches Patentamt / European Patent Office / Office européen des brevets**

(11) **EP 1 796 086 A1**

(12) # EUROPEAN PATENT APPLICATION
published in accordance with Art. 158(3) EPC

(43) Date of publication:
**13.06.2007 Bulletin 2007/24**

(51) Int Cl.:
**G11B 7/09** *(2006.01)*

(21) Application number: **05757794.2**

(22) Date of filing: **06.07.2005**

(86) International application number:
**PCT/JP2005/012471**

(87) International publication number:
**WO 2006/033195 (30.03.2006 Gazette 2006/13)**

(84) Designated Contracting States:
**DE FR GB IT**

(30) Priority: **22.09.2004 JP 2004274698**

(71) Applicant: **SONY CORPORATION**
**Tokyo 141-0001 (JP)**

(72) Inventor: **OKAMATSU, Kazuhiko**
**Shinagawa-ku, Tokyo**
**1410001 (JP)**

(74) Representative: **Nicholls, Michael John**
**J.A. KEMP & CO.**
**14, South Square**
**Gray's Inn**
**London WC1R 5JJ (GB)**

(54) **DISK DRIVING DEVICE AND METHOD, RECORDING MEDIUM, AND PROGRAM**

(57)    The present invention relates to a disc drive apparatus and method, a recording medium, and a program that can securely execute tracking control. The coefficient switching controller 152 inquires of the coefficient register 153 about coefficient values based on disc information supplied from a controller 161 and showing a type of an optical disc 111 mounted on an optical disc apparatus 101, mode information supplied from a gain mode switch unit 162 and showing that a mode is any one of "write" and "read", and RF information supplied from an RF signal detection unit 151 and showing whether or not an RF signal is detected. The coefficient switching controller 152 supplies the obtained coefficient values to a servo matrix amplifier 118 to thereby create a tracking error signal so that the tracking control can be securely executed. The present invention can be applied to a disc drive apparatus.

FIG. 4

**Description**

Technical Field

The present invention relates to a disc drive apparatus and method, a recording medium, and a program, and more particularly, to a disc drive apparatus and method, a recording medium, and a program for driving an optical disc.

Background Art

Recently, optical disc apparatuses for recording various types of data such as images, voices, and the like on optical discs such a CD (Compact Disc), DVD (Digital Versatile Disc) and the like or reproducing various types of data recorded on the optical discs have become widespread. The optical disc apparatus includes an optical pickup that focuses and irradiates a laser beam onto a signal surface of the optical disc and receives the reflected light (return light) reflected therefrom and outputs a reproduction signal and a servo error signal.

Since the optical disc is mounted on a spindle of the optical disc apparatus and driven in rotation, it always causes run-out in a radial direction due to decentering of a center hole, decentering thereof caused when it is caught, and the like as well as run-out in an optical axis direction due to warping of the optical disc and the irregular thickness thereof. Accordingly, the optical pickup is controlled such that the focusing point of the laser beam is always irradiated onto the tracks on the signal surface by following the run-out of the optical disc when it is driven in rotation.

The irradiating position of the laser beam is controlled by finely moving a part of an optical system of the optical pickup in response to a control signal. The control signal is a tracking error signal and a focus error signal acquired from the reflection light (return light) from the optical disc, and the focusing point of the laser beam is controlled so as to be irradiated onto the tacks on the signal surface by supplying these signals to a servo system.

Further, as a typical method of acquiring the tracking error signal, a three-beam method and a one-beam method are used.

The three-beam method is a method of generating three laser beams (light beams) composed of a main beam (zero order light) and two auxiliary beams ($\pm$one-order light) by disposing gratings in an outward path of the laser beam (return beam) to be irradiated onto an optical disc and uses the two auxiliary beams to create an tracking error. In this method, light receiving elements for detecting the two auxiliary beams are previously disposed on both the sides of a light receiving element for detecting the main beam, thereby the tracking error signal is acquired from the change of the reflection light of the auxiliary beams that is caused according to an amount of deflection of the focusing point of the main beam irradiated to the tracks of the optical disc.

In contrast, the one-beam method is a method of irradiating one laser beam (light beam) onto the optical disc and acquiring the tracking error signal therefrom. An optical system using the one-beam method is advantageous in that it can be arranged simply as well as the number of parts can be reduced because the optical elements such as the gratings and the like that are necessary when the three-beam method is used can be omitted.

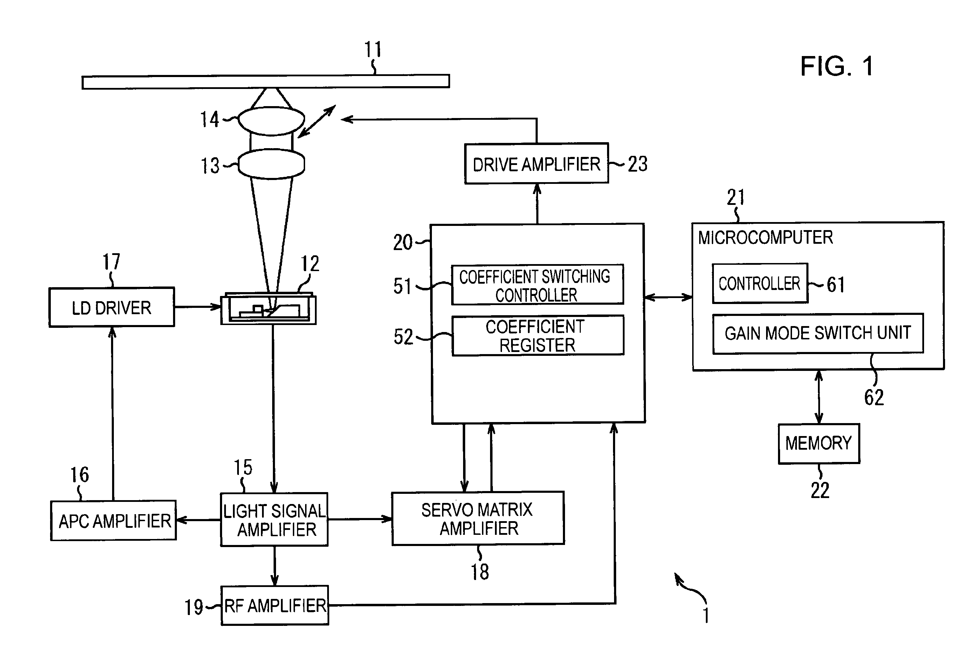

Fig. 1 is a view explaining an optical disc apparatus 1 making use a conventional one-beam method.

An optical disc 11 is a recording medium such as a CD, DVD and the like and driven in rotation by a spindle motor (not shown).

An integrated optical element 12 is composed of a laser diode, microprism, photo detector, or the like.

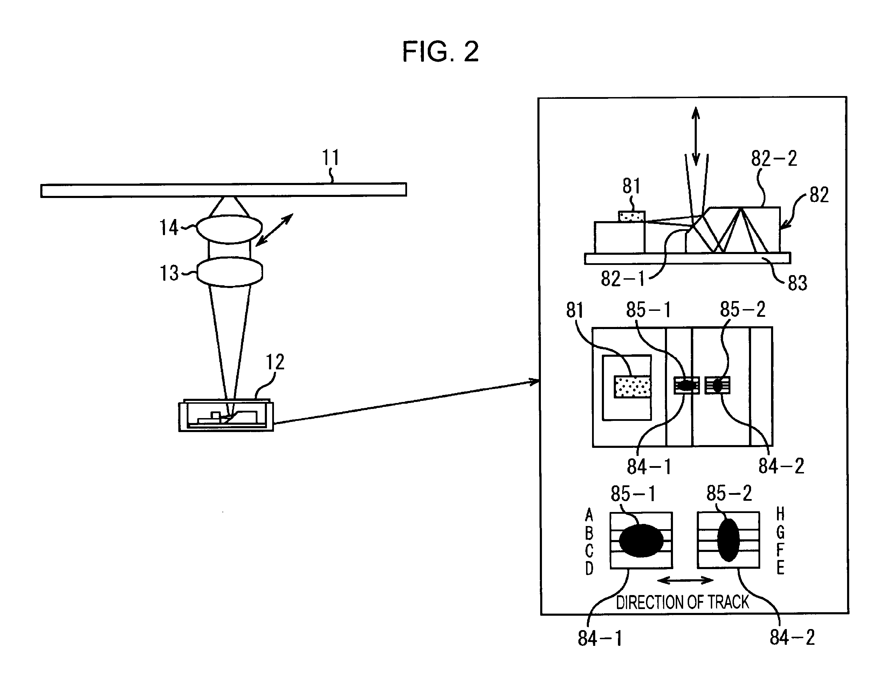

A laser beam emitted from the laser diode (laser diode 81 to be described later) of the integrated optical element 12 is focused on a recording surface of the optical disc 11 by an objective lens 14 through a collimator lens 13. The reflected light resulting from the laser beam and focused on the optical disc 11 is incident on the integrated optical element 12 through the objective lens 14 and the collimator lens 13. Photo detectors (photo detectors 84-1 and 84-2 shown in Fig. 2 to be described later) of the integrated optical element 12 receive the reflected light incident thereon, create electric signals according to the intensities (amounts of light) of the reflected light received thereby, and supply the created electric signals to a light signal amplifier 15.

The light signal amplifier 15 amplifies the electric signal supplied from the integrated optical element 12 and supplies the amplified electric signal to an APC (auto power control) amplifier 16, a servo matrix amplifier 18, and an RF (radio frequency) amplifier 19, respectively.

The APC amplifier 16 detects an amount of error from the electric signal supplied from the light signal amplifier 15 and adjusts the amount of laser beam, which is emitted from the laser diode (laser diode 81 of Fig. 2 to be described later) of the integrated optical element 12 controlled by an LD (Laser Diode) driver 17, to a constant amount based on the amount of error detected.

The servo matrix amplifier 18 creates a tracking error signal for servo control based on the electric signal supplied from the light signal amplifier 15 and the coefficient values (coefficient values Kd and Kdo) set by a coefficient switch controller 51 of a DSP (Digital Signal Processor) 20. The servo matrix amplifier 18 supplies the created tracking error signal to the DSP 20.

When the tracking error signal is created, sensitivity for detecting an amount of offset of a light spot on the photo detector is dispersed depending on the optical disc 11 and the optical pickup. Therefore, the coefficient value is set as the coefficient value of a tracking correction coefficient that is set according to respective conditions to suppress the dispersion. When the tracking error signal is created, coefficient values kd and kd0 are sets to two tracking correction coefficients.

Further, the servo matrix amplifier 18 creates a servo signal (focus error signal and the like) for the servo control from the electric signal supplied from the light signal amplifier 15 and supplies the created servo signal to the DSP 20.

The RF amplifier 19 creates an RF signal as reproduction data based on the electric signal supplied from the light signal amplifier 15. The RF amplifier 19 supplies the created RF signal to the DSP 20.

The DSP 20 executes phase compensation processing, gain correction processing, or the like to the tracking error signal supplied from the servo matrix amplifier 18 and supplies the tracking error signal, to which the phase compensation processing, gain correction processing, or the like is executed, to a drive amplifier 23.

Further, the DSP 20 executes the phase compensation processing, gain correction processing, or the like to the servo signal (focus error signal and the like) supplied from the servo matrix amplifier 18 and supplies the servo signal (focus error signal and the like), to which the phase compensation processing, gain correction processing, or the like are executed, to the drive amplifier 23.

Further, the DSP 20 decodes the RF signal supplied from the RF amplifier 19 by executing decode processing based on a predetermined recording system and supplies the decoded information to an output unit (not shown).

The DSP 20 includes a coefficient switching controller 51 and a coefficient register 52.

The coefficient switching controller 51 inquires of the coefficient register 52 about the coefficient values (coefficient values kd and kdo) based on disc information supplied from a controller 61 of a microcomputer 21 and mode information supplied from a gain mode switch unit 62 of the microcomputer 21 (request for coefficient values).

Further, the coefficient switching controller 51 acquires the coefficient values (coefficient values kd and kdo) from the coefficient register 52 as a result of inquiry. The coefficient switching controller 51 supplies the acquired coefficient values kd and kd0 to the servo matrix amplifier 18.

The coefficient register 52 stores the coefficient values and data for specifying them in correspondence to each other and supplies the coefficient values (coefficient values kd and kd0) to the coefficient switching controller 51 in response to an inquiry from the coefficient switching controller 51.

The microcomputer 21 controls the optical disc apparatus 1 in its entirety.

The microcomputer 21 includes the controller 61 and a gain mode switch unit 62.

The controller 61 acquires the disc information showing a type of the optical disc 11 mounted on the optical disc apparatus 1 and supplies the acquired disc information to the coefficient switching controller 51.

The gain mode switch unit 62 acquires the mode information showing that the mode of the optical disc apparatus 1 is any one of "write" and "read" and supplies the acquired mode information to the coefficient switching controller 51.

The memory 22 is composed of a non-volatile memory such as a RAM (Random Access Memory), EEPROM (Electronically-Erasable Programmable Read-Only Memory), flash memory, and the like, and stores programs and various types of data executed by the microcomputer 21.

The drive amplifier 23 causes an actuator to execute tracking control based on the tracking error signal supplied from the DSP 20. Further, the drive amplifier 23 causes the actuator to execute focus control based on the focus error signal of the servo signal supplied from the DSP 20.

Next, an optical system of the optical disc apparatus 1 according to the conventional one-beam method of Fig. 1 will be explained with reference to Fig. 2.

An upper view on the right in Fig. 2 is a side elevational view of the integrated optical element 12, a middle view of on the right in Fig. 2 is an upper view of the integrated optical element 12, and lower views on the right in Fig. 2 are enlarged views of the photo detectors 84-1 and 84-2 to be described later.

The laser beam emitted from the laser diode 81 arranged on a photo detector IC (Integrated Circuit) 83 is reflected on an oblique surface 82-1 of a microprism 82 and focused on the recording surface of the optical disc 11 by the objective lens 14 through the collimator lens 13.

The reflected light resulting from the laser beam focused on the optical disc 11 is incident on the integrated optical element 12 through the objective lens 14 the collimator lens 13. The photo detector IC 83 of the integrated optical element 12 receives the reflected light incident thereon, creates an electric signal according to the intensity (amount of light) of the reflected light received thereby, and supplies the created electric signal to the light signal amplifier 15.

Specifically, the photo detector IC 83 is arranged such that it includes the photo detectors 84-1 and 84-2 each having a light receiving surface divided into four regions. Thus, the reflected light incident from the oblique surface 82-1 of the microprism 82 is incident on the photo detector 84-1 as well as is further reflected and focused on the upper surface 82-2 of the microprism 82 and is also incident on the photo detector 84-2.

At the time, the respective light receiving regions A to D of the light receiving surface divided into the four regions of the photo detector 84-1 receive the reflected light incident thereon, respectively. The photo detector 84-1 creates electric signals A to D according to the intensities (amounts of light) of the reflected light received thereby and supplies the created electric signals A to D to the light signal amplifier 15. Likewise, the respective light receiving regions E to H of the light receiving surface divided into the four regions of the photo detector 84-2 receive the reflected light incident thereon, respectively. The photo detector 84-2 creates electric signals E to H according to the intensities (amounts of light) of the reflected light received thereby and supplies the created electric signals E to H to the light signal amplifier 15.

Light spots 85-1 and 85-2 show that the reflected light resulting from the laser beam focused on the optical disc 11 is received by the photo detectors 84-1 and 84-2, respectively. More specifically, the photo detector 84-1 receives the light spot 85-1 as the reflected light resulting from the laser beam focused on the optical disc 11, and the photo detector 84-2 receives the light spot 85-2 as the reflected light resulting from the laser beam focused on the optical disc 11. Each of the photo detectors 84-1 and 84-2 creates the electric signals according to the intensities (amounts of light) received thereby and supplies them to the light signal amplifier 15.

Further, in the following description, when it is not necessary to individually discriminate between the photo detectors 84-1 and 84-2, they are simply referred to as a photo detector 84. Further, when it is not necessary to individually discriminate between the light spots 85-1 and 85-2, they are simply referred to as a light spot 85.

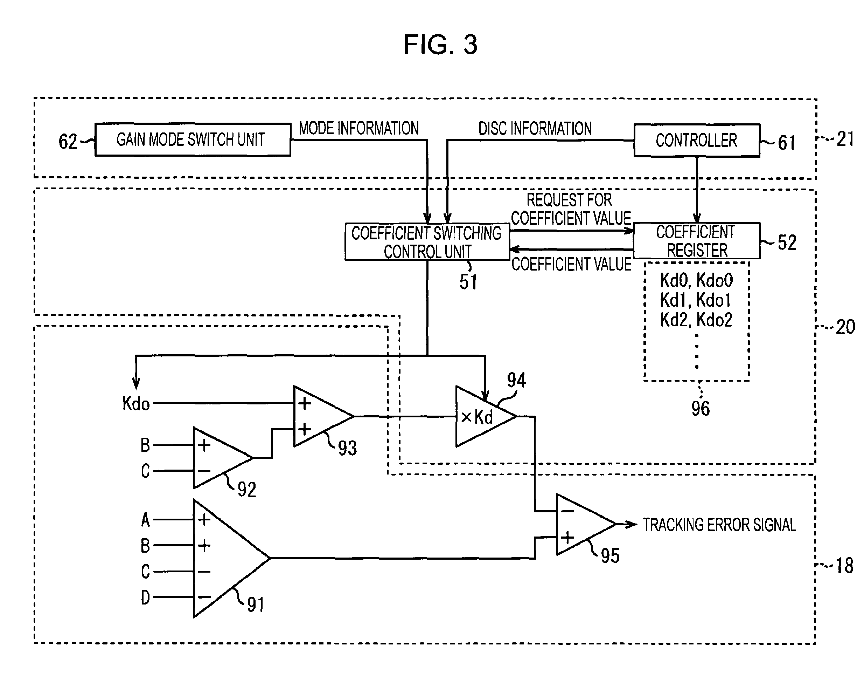

Fig. 3 is a block diagram showing a function for creating the tracking error signal by the conventional one-beam method in detail. The portions similar to those shown in Fig. 1 are denoted by the same reference numerals, and the description thereof is (appropriately) omitted.

When the disc information is supplied from the controller 61 and the mode information is supplied from the gain mode switch unit 62, the coefficient switching controller 51 inquires of the coefficient register 52 about coefficient values 96 (coefficient values kd and kdo) based on the disc information and the mode information. The coefficient switching controller 51 acquires the coefficient value kd set to "kd0" and the coefficient value kdo set to "kdo0" from the coefficient register 52. The coefficient switching controller 51 sets the acquired coefficient value kd set to "kd0" to a multiply unit 94 and the acquired coefficient value kdo set to "kdo0" to an addition unit 93.

When the tracking error signal is created, the sensitivity for detecting the amounts of offset of the light spots 85 on the photo detector 84 is dispersed depending on the optical disc 11 and the optical pickup. Thus, the coefficient values 96 are set as the coefficient values of the tracking correction coefficients that are set according to the respective conditions to suppress the dispersion. The coefficient values 96 are composed of the coefficient values of the two tracking correction coefficients, that is, the coefficient value kd (kd0, kd1, kd2, or the like) and the coefficient value kdo (kdo0, kdo1, kdo2, kdo3, or the like).

An arithmetic operation unit 91 subtract an electric signals (C+D) showing the intensity of the reflected light received by the light receiving surface (light receiving regions C and D) on the lower side of the photo detector 84-1 from an electric signal (A+B) showing the intensity of the reflected light received by the light receiving surface (light receiving regions A and B) on the upper side of the photo detector 84-1 based on the electric signals A to D supplied from the respective light receiving regions A to D divided into the four regions of the light receiving surface of the photo detector 84-1 and supplies an electric signal ((A+B)-(C+D)) resulting from the subtraction to a subtraction unit 95.

A subtraction unit 92 subtracts the electric signal C from the electric signal B based on the electric signals B and C supplied from the light receiving regions B and C of the light receiving surface divided into the four regions of the photo detector 84-1 and supplies an electric signal (B-C) resulting from the subtraction to an addition unit 93.

The addition unit 93 adds the electric signal (B-C) and the coefficient value kdo based on the electric signal (B-C) supplied from the subtraction unit 92 and the coefficient value kdo set by the coefficient switching controller 51 and supplies an electric signal (B-C+kdo) to a multiply unit 94.

Here, as described above, the coefficient value kdo set to the addition unit 93 is the coefficient value which the coefficient switching controller 51 acquires from the coefficient register 52 by inquiring of the coefficient register 52 about it based on the disc information supplied from the controller 61 and the mode information supplied from the gain mode switch unit 62.

That is, since the optical disc apparatus 1 switches the coefficient value depending on a state of the disc (disc information and mode information), it can switch the coefficient value kdo only when an initial value is set at the time the disc is inserted and cannot switch the coefficient value kdo at real time.

The multiply unit 94 multiplies the electric signal (B-C+kdo) supplied from the addition unit 93 by the coefficient value kd set to "kd" and supplies an electric signal (B-C+kdo)xkd resulting from the multiplication to the subtraction unit 95.

Here, as described above, the coefficient value kd set to the multiply unit 94 is the coefficient value when the switching controller 51 acquires from the coefficient register 52 by inquiring of the coefficient register 52 about it based on the disc information supplied from the controller 61 and the mode information supplied from the gain mode switch unit 62.

That is, since the optical disc apparatus 1 switches the coefficient value depending on the state of the disc (disc information and mode information), it can switch the coefficient value kd only when an initial value is set at the time the disc is inserted and cannot switch the coefficient value kd at real time.

The subtraction unit 95 subtracts an electric signal ((B-C)+Kdo)xKd from the electric signal ((A+B)-(C+D))

based on the electric signal ((A+B)-(C+D)) supplied from the arithmetic operation unit 91 and the electric signal ((B-C)+kd)×kd supplied from the multiply unit 94 and supplies ((A+B)-(C+D))-((B-C)+Kdo)×Kd to the DSP 20 as the tracking error signal.

As described above, the optical disc apparatus 1 executes the tracking control without using the RF signal included in the reflected light resulting from the laser beam focused on the optical disc 11.

Further, there is also a servo signal processing apparatus which multiplies the peak level of a light detection signal acquired from return light from tracks composed of pits by a coefficient that changes according to the characteristic of a disk-like recording medium, detects a tracking error signal from which an offset component caused by the relative movement of an objective lens is eliminated and executes tracking servo processing based on the detected tracking error signal (for example, refer to Patent Document 1).

[Patent Document 1] Japanese Unexamined Patent Application Publication No. 10-124891

Disclosure of Invention

Problems to be Solved by the Invention

However, since the tracking error signal acquired by the one-beam method is modulated depending on whether or not the RF signal is present and the value thereof is changed thereby, when the coefficient value of a tracking correction coefficient is not adjusted depending on whether or not the RF signal is present, the tracking control cannot be executed by setting an optimum coefficient value in both the case in which the RF signal is present and the case in which no RF signal is present, from which a problem arises in that an optimum tracking control state cannot be achieved.

An object of the present invention, which was made in view of the above circumstances, is to stably and accurately execute the tracking control by controlling the coefficient values of the tracking correction coefficients by making use of the RF signal to create the tracking error signal.

Means for Solving the Problems

A disc drive apparatus of the present invention comprises a first acquisition means for acquiring first information as information of a type of the optical disc, a second acquisition means for acquiring second information showing that the optical disc is operated in any of data write mode and data read mode to the optical disc, a detection means for detecting an RF (Radio Frequency) signal from the reflected light; a third acquisition means for acquiring, when the third information, which shows the presence or absence of the RF signal detected by the detection means, changes, one coefficient from a plurality of predetermined coefficients to calculate the tracking signal stored in a storage unit based on the first information, the second information, and the third information, and an arithmetic operation means for calculating the tracking error signal based on the intensity of the reflected light and the coefficient acquired by the third acquisition means.

When the first information or the second information changes, the third acquisition means acquires one coefficient from a plurality of the coefficients stored in the storage unit based on the first information, the second information, and the third information, and the arithmetic operation means calculates the tracking error signal based on the intensity of the reflected light and the coefficient acquired by the third acquisition means.

The first acquisition means acquires the first information that shows any of a DVD-R (Digital Versatile Disk Specifications for Recordable Disc), a DVD-RW (DVD Specifications for Re-recordable Disc), a DVD+R (DVD Specifications for +Recordable Disc), or a DVD+RW (DVD Specifications for +ReWritable Disc) as the type of the optical disc.

A disc drive method of the present invention comprises a first acquisition step of acquiring first information as information of a type of the optical disc, a second acquisition step of acquiring second information showing that the optical disc is operated in any of data write mode and data read mode to the optical disc, a detection step of detecting an RF signal from the reflected light, a third acquisition step of acquiring, when the third information, which shows the presence or absence of the RF signal detected by the detection means, changes, one coefficient from a plurality of predetermined coefficients to calculate the tracking signal stored in a storage unit based on the first information, the second information, and the third information, and an arithmetic operation step of calculating the tracking error signal based on the intensity of the reflected light and the coefficient acquired by the third acquisition means.

A program of a recording medium of the present invention comprises a first acquisition step of acquiring first information as information of a type of the optical disc, a second acquisition step of acquiring second information showing that the optical disc is operated in any of data write mode and data read mode to the optical disc, a detection step of detecting an RF signal from the reflected light, a third acquisition step of acquiring, when the third information, which shows the presence or absence of the RF signal detected by the detection means, changes, one coefficient from a plurality of predetermined coefficients to calculate the tracking signal stored in a storage unit based on the first information, the second information, and the third information, and an arithmetic operation step of calculating the tracking error signal based on the intensity of the reflected light and the coefficient acquired by the third acquisition means.

A program of the present invention comprises a first acquisition step of acquiring first information as information of a type of the optical disc, a second acquisition step of acquiring second information showing that the optical disc is operated in any of data write mode and data read mode to the optical disc, a detection step of detecting an RF signal from the reflected light, a third acquisition step of acquiring, when the third information, which shows the presence or absence of the RF signal detected by the detection means, changes, one coefficient from a plurality of predetermined coefficients to calculate the tracking signal stored in a storage unit based on the first information, the second information, and the third information, and an arithmetic operation step of calculating the tracking error signal based on the intensity of the reflected light and the coefficient acquired by the third acquisition means.

In the disc drive apparatus and method, the recording medium, and the program of the present invention, the first information as the information of the type of the optical disc is acquired, the second information showing that the optical disc is operated in any of the data write mode and the data read mode to the optical disc, the RF signal is detected from the reflected light, when the third information, which shows the presence or absence of the RF signal detected by the detection means, changes, one coefficient is acquired from a plurality of coefficients predetermined to calculate the tracking signal stored in a storage unit based on the first information, the second information, and the third information, and the tracking error signal is calculated based on the intensity of the reflected light and the acquired coefficient.


Advantages

According to the present invention, tracking can be controlled. Further, according to the present invention, the optical disc can be securely reproduced as well as data can be securely recorded thereon.


Brief Description of the Drawings

Fig. 1 is a view explaining an optical disc apparatus making use of a conventional one-beam method.
Fig. 2 is a view showing an optical system for creating a tracking error signal by the conventional one-beam method.
Fig. 3 is a block diagram showing a function for creating the tracking error signal by the conventional one-beam method in detail.
Fig. 4 is a block diagram showing an arrangement of an embodiment of an optical disc apparatus making use of a one-beam method to which the present invention is applied.
Fig. 5 is a view showing an example of an optical system for creating a tracking error signal by the one-beam method.
Fig. 6 is a view showing a circuit arrangement for creating the tracking error signal by the one-beam method.
Fig. 7A is a view explaining an RF signal in detail.
Fig. 7B is a view explaining the RF signal in detail.
Fig. 8 is a block diagram showing a function for creating the tracking error signal by the one-beam method in detail.
Fig. 9 is a flowchart explaining coefficient value switch processing.
Fig. 10 is a view explaining an example of a coefficient value stored in a coefficient register.
Fig. 11 is a view showing another circuit arrangement for creating the tracking error signal by the one-beam method.
Fig. 12 is a block diagram explaining an arrangement of an optical disc apparatus.


[Reference Numerals]

101 optical disc apparatus, 111 optical disc, 115 light signal amplifier, 118 servo matrix amplifier, 119 RF amplifier, 120 DSP, 121 microcomputer, 122 memory, 123 drive amplifier, 151 RF signal detection unit, 152 coefficient switching controller, 153 coefficient register, 161 controller, 162 gain mode switch unit, 201 arithmetic operation unit, 202 subtraction unit, 203 addition unit, 204 multiply unit, 205 subtraction unit


Best Mode for Carrying Out the Invention

An embodiment of the present invention will be described blow with reference to the drawings.

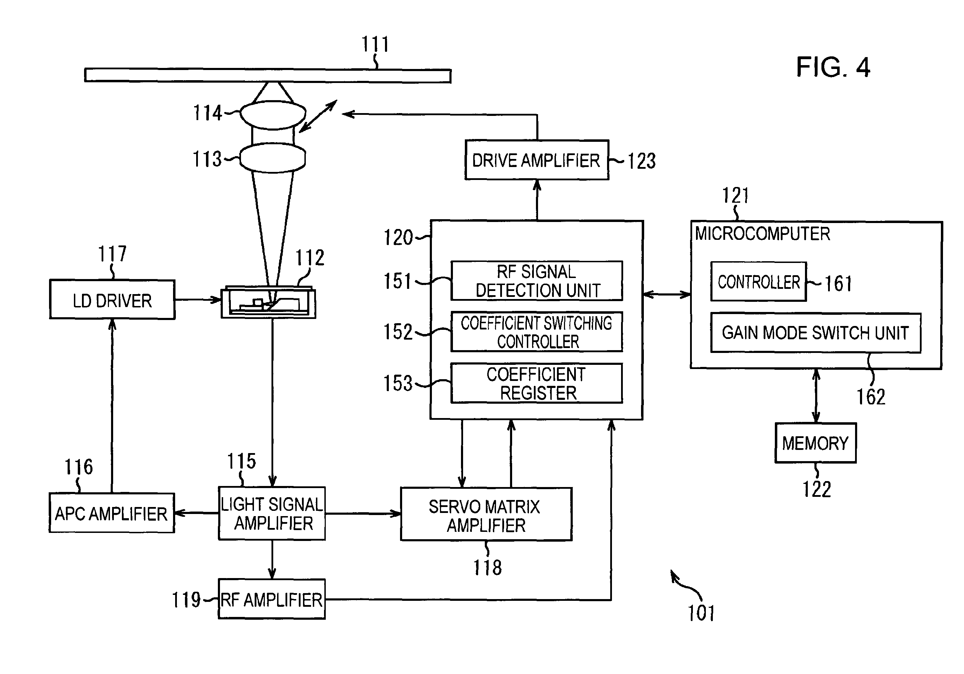

Fig. 4 is a block diagram showing an arrangement of an embodiment of an optical disc apparatus 101 making use of a one-beam method to which the present invention is applied.
The optical disc apparatus 101 is an example of a disc drive apparatus for executing recording and reproducing by an optical disc.
The optical disc 111 is a recording medium such as a CD, DVD, and the like and rotated by a spindle motor (not shown).

An integrated optical element 112 is composed of, for example, a laser diode, microprism, photo detector, or the like.

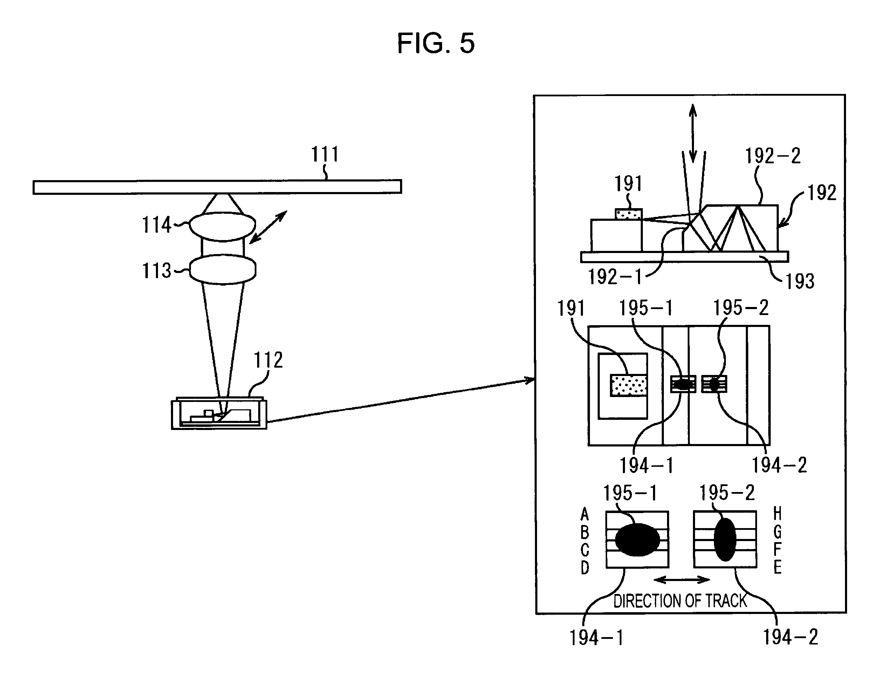

A laser beam emitted from a laser diode (laser diode 191 of Fig. 5 to be described later) of the integrated optical element 112 is focused on a recording surface of the optical disc 111 by an objective lens 114 through a collimator lens 113. Reflected light resulting from the laser beam focused on the optical disc 111 is incident on the integrated optical element 112 through the objective lens 114 and the collimator lens 113. Photo detectors (photo detectors 194-1 and 194-2 to be described later) receive the reflected light incident thereon, create electric signals according to the intensities (amounts of light) of the reflected light received thereby, and supply the created electric signals to a light signal amplifier 115.

The light signal amplifier 115 amplifies the electric signal supplied from the integrated optical element 112 and supplies the amplified electric signal to an APC amplifier 116, a servo matrix amplifier 118, and an RF amplifier 119, respectively.

Note that the integrated optical element 112 is not limited to the above example and may be integrated with the light signal amplifier 115.

The APC amplifier 116 detects an amount of error from the electric signal supplied from the light signal amplifier 115 and adjusts the amount of laser beam emitted from the laser diode (laser diode 191 of Fig. 5 to be described later) of the integrated optical element 112 controlled by an LD driver 117 based on the detected amount of error so that it is made constant.

The servo matrix amplifier 118 creates a tracking error signal based on the electric signal supplied from the light signal amplifier 115 and coefficient values (coefficient values Kd and Kdo) set by a coefficient switch controller 152 of a DSP (Digital Signal Processor) 120. The servo matrix amplifier 118 supplies the created tracking error signal to the DSP 120.

When the tracking error signal is created, sensitivity for detecting the amounts of offset of light spots on the photo detector is dispersed depending on the optical disc 111 and an optical pickup. Thus, the coefficient values are set as the coefficient values of tracking correction coefficients that are set according to respective conditions to suppress the dispersion. When the tracking error signal is created, the coefficient values, for example, the coefficient values kd and kdo are set to two tracking correction coefficients.

Further, the servo matrix amplifier 118 creates a servo signal (for example, focus error signal and the like) for servo control from the electric signal supplied from the light signal amplifier 115 and supplies the created servo signal to the DSP 120.

The RF amplifier 119 creates an RF signal as reproduction data based on the electric signal supplied from the light signal amplifier 115. The RF amplifier 119 supplies the created RF signal to the DSP 120 and an RF signal detection unit 151.

Note that the RF amplifier 119 may be arranged such that it is included in the servo matrix amplifier 118.

The DSP 120 executes, for example, phase compensation processing, gain correction processing, or the like to the tracking error signal supplied from the servo matrix amplifier 118 and supplies the tracking error signal, to which the phase compensation processing, gain correction processing, or the like is executed, to a drive amplifier 123.

Further, the DSP 120 executes, for example, phase compensation processing, gain correction processing, or the like to the servo signal (for example, focus error signal and the like) supplied from the servo matrix amplifier 118 and supplies the servo signal (for example, focus error signal and the like), to which the phase compensation processing, gain correction processing, or the like is executed, to the drive amplifier 123.

Further, the DSP 120 decodes the RF signal supplied from the RF amplifier 119 by executing decode processing thereto based on a predetermined recording system and supplies the decoded information to an output unit (not shown).

The DSP 120 includes the RF signal detection unit 151, the coefficient switching controller 152, and a coefficient register 153.

The RF signal detection unit 151 detects the RF signal supplied from the RF amplifier 119 and supplies RF information showing whether or not the RF signal is detected to the coefficient switching controller 152. When, for example, the RF signal detection unit 151 detects the RF signal from the RF amplifier 119, it supplies an RF signal "presence" showing that the RF signal is present to the coefficient switching controller 152, whereas when the RF signal detection unit 151 does not detect the RF signal from the RF amplifier 119, it supplies an RF signal "absence" showing that the RF signal is absent to the coefficient switching controller 152.

Note that the RF signal is detected by the RF signal detection unit in, for example, such a manner of converting the reflected light resulting from the laser beam focused on the optical disc 111 into an electric signal and then comparing the voltage of the reflected light converted into the electric signal with a predetermined arbitrary reference voltage. More specifically, when, for example, the voltage of the reflected light converted into the electric signal is equal to or more than the reference voltage, since the RF signal detection unit 151 detects the RF signal, it supplies the RF information "presence" to the coefficient switching controller 152, whereas when the voltage of the reflected light converted into the electric signal is less than the reference voltage, since the RF signal detection unit 151 does not detect the RF signal, it supplies the RF information "absence" to the coefficient switching controller 152.

The coefficient switching controller 152 inquires of the coefficient register 153 about the coefficient values (coefficient values kd and kdo) based on disc information supplied from a controller 161 of a microcomputer 121, mode information supplied from a gain mode switch unit 162 of the microcomputer 121, and RF information supplied from the RF signal detection unit 151 (request for coefficient values).

Further, the coefficient switching controller 152 acquires the coefficient values (coefficient values kd and kdo) from the coefficient register 153 as a result of inquiry. The coefficient switching controller 152 supplies the acquired coefficient values kd and kdo to the servo matrix amplifier 118.

For example, the coefficient switching controller 152 inquires of the coefficient register 153 about the coefficient values (coefficient values kd and kdo) based on the disc information "DVD-R" supplied from the controller 161, the mode information "read" supplied from the gain mode switch unit 162 of the microcomputer 121, and the RF information "presence" supplied from the RF signal detection unit 151. The coefficient switching controller 152 acquires the coefficient values kd set to "kd0" and the coefficient values kdo set to "kdo0" from the coefficient register 153 and supplies the acquired coefficient value kd set to "kd0 and the acquired coefficient value kdo set to "kdo0" to the servo matrix amplifier 118.

The coefficient register 153 stores, for example, the coefficient values and data for specifying the coefficient values in correspondence to each other and supplies the coefficient values (coefficient values kd and kd0) to the coefficient switching controller 152 in response to an inquiry therefrom.

For example, the coefficient register 153 stores the coefficient values and the data for specifying the coefficient values as a table and supplies the coefficient values kd set to "kd0" and the coefficient values kdo set to "kdo0" to the coefficient switching controller 152 in response to an inquiry for the disc information "DVD-R", the mode information "read", and the RF information "presence" from the coefficient switching controller 152.

The microcomputer 121 controls the optical disc apparatus 101 in its entirety.

The microcomputer 121 includes the controller 161 and the gain mode switch unit 162.

The controller 161 acquires disc information showing a type of the optical disc 111 mounted on the optical disc apparatus 101 and supplies the acquired disc information to the coefficient switching controller 152.

For example, the controller 161 acquires the disc information "DVD-R" as the type of the optical disc 111 mounted on the optical disc apparatus 101 and supplies the acquired disc information "DVD-R" to the coefficient switching controller 152. Specifically, the controller 161 executes servo processing as soon as a DVD is mounted on the optical disc 111 by an operation of a user and reads the information of the type of the disc recorded in the DVD, acquires the disc information that is, for example, "DVD-R", and supplies the acquired disc information "DVD-R" to the coefficient switching controller 152.

The gain mode switch unit 162 acquires mode information showing that the mode of the optical disc apparatus 101 is any one of "write" and "read" and supplies the acquired mode information to the coefficient switching controller 152. When, for example, the mode of the optical disc apparatus 101 is "write", the gain mode switch unit 162 supplies the mode information "write" showing that the mode is "write" to the coefficient switching controller 152, whereas when the mode of the optical disc apparatus 101 is "read", the gain mode switch unit 162 supplies the mode information "read" showing that the mode is "read" to the coefficient switching controller 152.

Note that the DSP 120 may acquire the mode information "read" or "write" in place of the gain mode switch unit 162 and may supply the acquired mode information to the coefficient switching controller 152.

A memory 122 is composed of, for example, a non-volatile, for example, a RAM, EEPROM, flash memory, and the like and stores programs and various types of data executed by the microcomputer 121.

The drive amplifier 123 causes an actuator to execute tracking control based on the tracking error signal supplied from the DSP 120. At the time, the tracking error signal supplied from the DSP 120 is a tracking error signal that minimizes an offset of tracks with respect to a difference between optical pickups, optical discs, tracking control systems, and the like and to an environment in which it is considered to reproduce (or record) a signal from or to other optical disc.

Further, the drive amplifier 123 causes the actuator to execute focus control based on the focus error signal of the servo signal supplied from the DSP 120.

Next, an optical system of the optical disc apparatus 101 using the one-beam method of Fig. 4 to which the present invention is applied will be explained in detail with reference to Fig. 5.

Fig. 5 is a view showing an example of the optical system for creating the tracking error signal by the one-beam method.

An upper view on the right in Fig. 5 is a side elevational view of the integrated optical element 112, a middle view on the right in Fig. 5 is an upper surface view of the integrated optical element 112, and lower views on the right in Fig. 2 are enlarged views of the photo detectors 194-1 and 194-2 to be described later.

The laser beam emitted from the laser diode 191 arranged on a photo detector IC 193 is reflected on an oblique surface 192-1 of a microprism 192 and focused on the recording surface of the optical disc 111 by the objective lens 114 through the collimator lens 113.

The reflected light resulting from the laser beam focused on the optical disc 111 is incident on the integrated optical element 112 through the objective lens 114 and the collimator lens 113. The photo detector IC 193 of the integrated optical element 112 receives the reflected light incident thereon, creates an electric signal according to the intensity (amount of light) of the reflected light received thereby, and supplies the created electric signal to the light signal amplifier 115.

More specifically, the photo detector IC 193 is arranged such that it includes the photo detectors 194-1 and 194-2 each having a light receiving surface divided into four regions. Thus, the reflected light incident from the oblique surface 192-1 of the microprism 192 is incident on the photo detector 194-1 as well as is further reflected and focused on the upper surface 192-2 of the microprism 192 and is also incident on the photo detector 194-2.

At the time, the respective light receiving regions A to D of the light receiving surface divided into the four regions of the photo detector 194-1 receive the reflected light incident thereon, respectively. The photo detector 194-1 creates electric signals A to D according to the intensities (amounts of light) of the reflected light received thereby and supplies the created electric signals A to D to the light signal amplifier 115. Likewise, the respective light receiving regions E to H of the light receiving surface divided into the four regions of the photo detector 194-2 receive the reflected light incident thereon, respectively. The photo detector 194-2 creates electric signals E to H according to the intensities (amounts of light) of the reflected light received thereby and supplies the created electric signals E to H to the light signal amplifier 115.

Light spots 195-1 and 195-2 show that the reflected light resulting from the laser beam focused on the optical disc 111 is received by the photo detectors 194-1 and 194-2, respectively. More specifically, the photo detector 194-1 receives the light spot 195-1 as the reflected light resulting from the laser beam focused on the optical disc 111, and the photo detector 194-2 receives the light spot 195-2 as the reflected light resulting from the laser beam focused on the optical disc 111. Each of the photo detectors 194-1 and 194-2 creates the electric signals according to the intensities (amounts of light) of the reflected light received thereby and supplies them to the light signal amplifier 115.

Note that although the one laser beam emitted from the laser diode 191 is divided into two portions, this division is executed to increase sensitivity for detecting the focus error signal.

Further, when it is not necessary to individually discriminate between the photo detectors 194-1 and 194-2 in the following description, they are simply referred to as a photo detector 194. Further, when it is not necessary to individually discriminate between the light spots 195-1 and 195-2, they are simply referred to as a light spot 195.

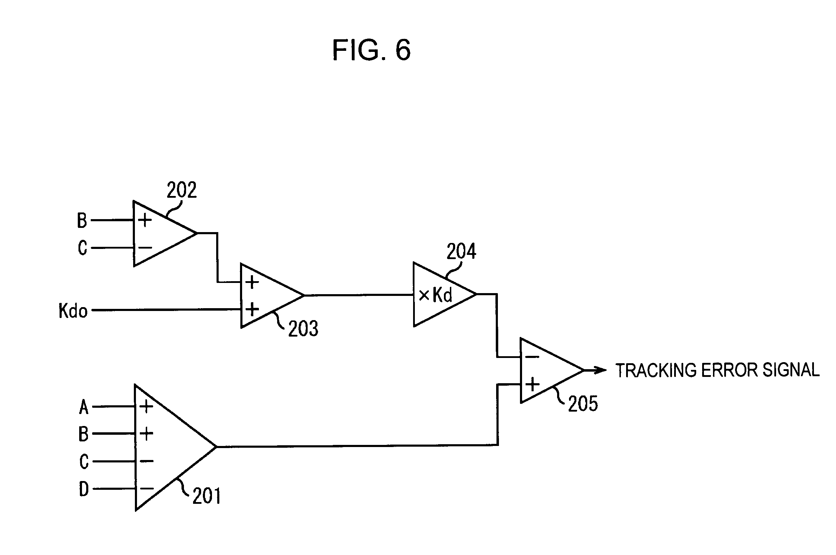

Next, the optical disc apparatus 101 that creates the tracking error signal by the one-beam method using an RF signal will be explained in detail with reference to Figs. 6 to 8.

First, a circuit arrangement for creating the tracking error signal by the one-beam method will be explained with reference to Fig. 6.

An arithmetic operation unit 201 subtracts the electric signal (C+D) showing the intensity of the reflected light received by the light receiving surface (light receiving regions C and D) on the lower side of the photo detector 194-2 from the electric signal (A+B) showing the intensity of the reflected light received by the light receiving surface (light receiving regions A and B) on the upper side of the photo detector 194-1 based on the electric signals A to D supplied from the respective light receiving regions A to D divided into the four regions of the light receiving surface of the photo detector 84-1 and supplies an electric signal ((A+B)-(C+D)) resulting from the subtraction to a subtraction unit 205.

Incidentally, the electric signal ((A+B)-(C+D)) is ordinarily used to the tracking control. However, when only the objective lens 114 is moved in the tracking control executed by the one-beam method using the optical system described above, the centers of the photo detectors 194-1 and the 194-2 whose light receiving surfaces are divided are not in coincidence with the center of the reflected light from the optical disc 111. As a result, the incident positions of the light spot 195 on the light receiving surfaces of the photo detectors 194-1 and 194-2 shift and cause an offset to the tracking error signal. Thus, the offset must be cancelled.

The offset is cancelled by detecting the offset (that is, the amount of shift of the objective lens 114) of the light spot 195-1 on the photo detector 194-1 by detecting the difference between the levels of amplitude of a wobble signal in the light receiving regions A and D in the light receiving surface divided into the four regions of the photo detector 194-1 that receives the light spot 195-1 that is the reflected light from the optical disc 111.

That is, a subtraction unit 202, an addition unit 203, a multiply unit 204, and the subtraction unit 205 cancel the offset of the tracking error signal based on an amount of shift signal according to, for example, the amount of shift of the objective lens 114 or the amount of shift of the light spot 195-1.

The subtraction unit 202 subtracts the electric signal C from the electric signal B based on the electric signals B and C supplied from the light receiving regions B and C of the light receiving surface divided into the four regions of the photo detector 194-1 and supplies an electric signal (B-C) resulting from the subtraction to the addition unit 203.

The addition unit 203 adds the electric signal (B-C) and the coefficient value kdo set to "kdo" based on the electric signal (B-C) supplied from the subtraction unit 202 and the coefficient value kdo set to "kdo" by the coefficient switching controller 152 and supplies the electric signal (B-C+kdo) resulting from the addition to the multiply unit 204.

The multiply unit 204 multiplies the electric signal (B-C+kdo) by the coefficient value kd set to "kd" based on the electric signal (B-C+kdo) supplied from the addition unit 203 and the coefficient value kd set to "kd" by the coefficient switching controller 152 and supplies an electric signal ((B-C)+kdo)xkd resulting from the multiplication to the subtraction unit 205.

The subtraction unit 205 subtracts the electric signal ((B-C)+Kdo)×Kd from the electric signal ((A+B)-(C+D)) based on the electric signal ((A+B)-(C+D)) supplied from the arithmetic operation unit 201 and the electric signal and the electric signal ((B-C)+kdo)xkd supplied from the multiply unit 204 and supplies an electric signal ((A+B)-(C+D))-((B-C)+Kdo)xKd resulting from the subtraction to the DSP 120 as the tracking error signal.

More specifically, the total reflection surface TE is calculated from the following expression (1)

$$TE = ((A+B) - (C+D)) - ((B-C) + Kdo) \times Kd \ \ldots \quad (1)$$

Note that a tracking servo system for creating the tracking error signal by the circuit arrangement described above is referred to as a WPP (Wobble Push Pull) system.

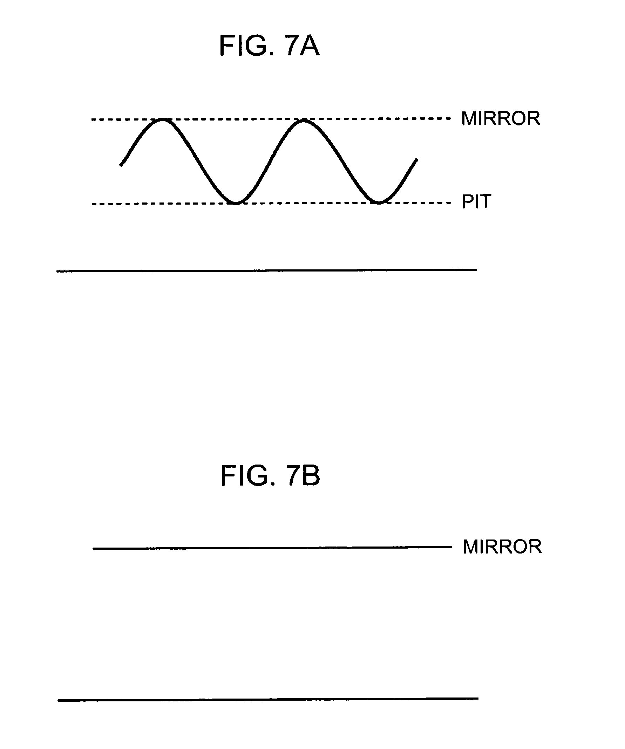

Next, the RF signal, which is detected to set the coefficient values (coefficient values kd and kdo) of the tracking correction coefficients will be explained in detail with reference to Fig. 7.

In examples shown in Figs. 7A and 7B, Fig. 7A shows an example of a waveform when the RF signal is present, and Fig. 7B shows an example of a waveform when the RF signal is absent. Further, in the examples shown by Figs. 7A and 7B, the vertical axis shows the level of the reflected light resulting from the laser beam focused on the optical disc 111, and the level of the reflected light increases toward an upper direction. Further, the lateral axis shows time.

In the example shown in Fig. 7A, when the RF signal is present, since information is recorded on the optical disc 111, the reflected light resulting from the laser beam irradiated to the pits on the optical disc 111 is diffracted, thereby the level of the reflected light is reduced. That is, when the RF signal is present, since the level of the reflected light resulting from the laser beam is reduced by the pits, the reflected light has a sine waveform as shown in Fig. 7A.

In contrast, in the example shown in Fig. 7B, when the RF signal is absent, since no information is recorded on the optical disc 111, the reflected light resulting from the laser beam is reflected as it is, and thus the reflected light has a constant level. That is, when the RF signal is absent, since the level of the reflected light resulting from the laser beam has the constant level, the level is set to a constant value (the value is constant on a mirror level) as shown in Fig. 7B.

As described above, when the information is recorded on the optical disc 111, the RF signal is detected, whereas when no information is recorded on the optical disc 111, the RF signal is not detected. Further, the RF signal is frequently changed depending on whether or not the information is recorded on the optical disc 111.

At the time, since the tracking error signal is changed (is modulated) depending on whether or not the RF signal is present, when the coefficient values of the tracking correction coefficients are not adjusted depending on whether or not the RF signal is present, the tracking control cannot be executed by setting an optimum coefficient value in both the case in which the RF signal is present and the case in which the RF signal is absent, thereby an optimum tracking control state cannot be achieved. Accordingly, when the coefficient values of the tracking correction coefficients are set in the optical disc apparatus 101 of the present invention, whether or not the RF signal is present is detected, and the coefficient values are set based on the detected RF signal.

Next, a function for creating the tracking error signal by the one-beam method using the RF signal will be explained in detail.

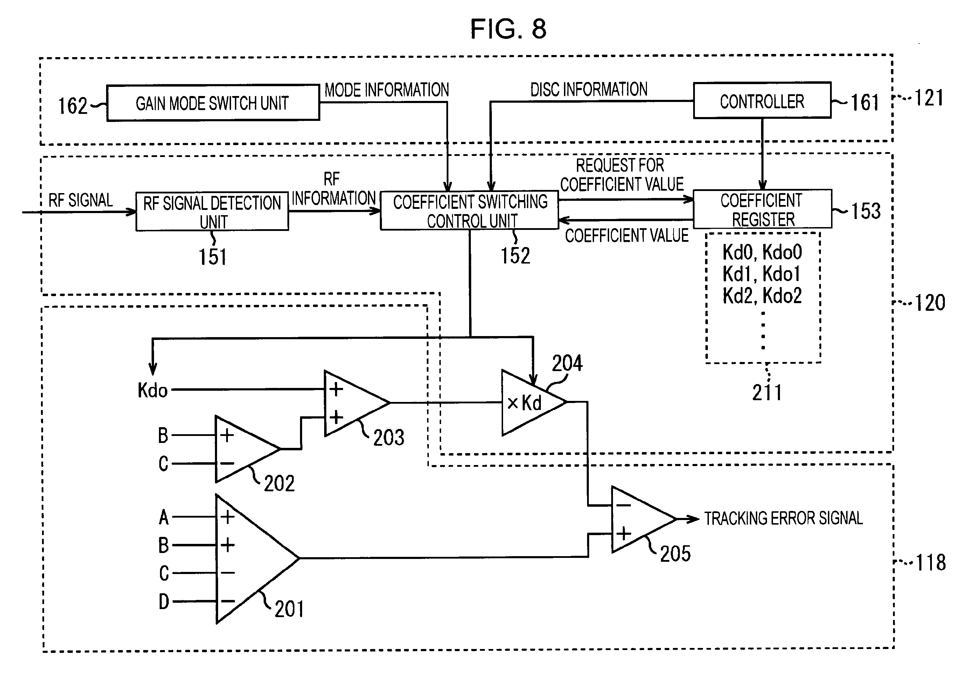

Fig. 8 is a block diagram showing the function for creating the tracking error signal by the one-beam method in detail. The portions similar to those shown in Figs. 4 and 6 are denoted by the same reference numerals, and the description thereof is (appropriately) omitted.

In an example shown in Fig. 8, a circuit arrangement for creating the tracking error signal by the one-beam method is the same as that of Fig. 6.

A coefficient switching controller 152 inquires of a coefficient register 153 about coefficient values (coefficient value kd and coefficient value kdo) based on the disc information supplied from a controller 161, mode information supplied from a gain mode switch unit 162, and RF information supplied from an RF signal detection unit 151 (request for coefficient values).

Further, the coefficient switching controller 152 acquires the coefficient values (coefficient values kd and kdo) from the coefficient register 153 as a result of inquiry. The coefficient switching controller 152 sets the coefficient value kd acquired thereby to a multiply unit 204 and sets the coefficient value kdo to the addition unit 203.

For example, the coefficient switching controller 152 inquires of the coefficient register 153 about the coefficient values (coefficient values kd and kdo) based on the disc information "DVD-R" supplied from the controller 161, the mode information "read" supplied from the gain mode switch unit 162, and the RF information "presence" supplied from the RF signal detection unit 151. The coefficient switching controller 152 acquires the coefficient value Kd set to "kd0" and the coefficient value kdo set to "Kdo0" from the coefficient register 153. The coefficient switching controller 152 sets the acquired coefficient value kd set to "kd0" to the multiply unit 204 and the acquired coefficient value kdo set to "kdo0" to the addition unit 203.

Further, when any information of the disc information supplied from the controller 161, the mode information supplied from the gain mode switch unit 162, and the RF information supplied from the RF signal detection unit 151 changes, the coefficient switching controller 152 inquires of the coefficient register 153 about the coefficient values (coefficient value kd and coefficient value kdo) again.

Then, the coefficient switching controller 152 acquires the coefficient values (coefficient value kd and coefficient value kdo) from the coefficient register 153 as a result of inquiry and sets the acquired coefficient value kd to the multiply unit 204 and the acquired the coefficient value kdo to the addition unit 203.

For example, when the disc information "DVD-R" supplied from the controller 161, the mode information "read" supplied from the gain mode switch unit 162, and the RF information "presence" supplied from the RF signal detection unit 151 change from "presence" to "absence", the coefficient switching controller 152 inquires of the coefficient switching controller 152 about the coefficient values (coefficient values kd and kdo) based on the disc information "DVD-R", the mode information "read", and the RF information "presence" supplied from the RF signal detection unit 151. The coefficient switching controller 152 acquires the coefficient value Kd set to "kd1" and the coefficient value kdo set to "Kdo1" from the coefficient register 153. The coefficient switching controller 152 sets the acquired coefficient value kd set to "kd1" to the multiply unit 204 and the acquired kdo set to "kdo1" to the addition unit 203.

As described above, since the coefficient switching controller 152 changes the coefficient values of the tracking correction coefficients depending on whether the RF signal is present or absent, it can execute the tracking control stably and accurately regardless the presence or absence of the RF signal.

The coefficient register 153 stores, for example, coefficient values 211 and data (not shown) for specifying the coefficient value in correspondence to each other and supplies the coefficient values (coefficient values kd and kd0) to the coefficient switching controller 152 in response to an inquiry from the coefficient switching controller 152.

For example, the coefficient register 153 stores the coefficient values 211 and the data for specifying the coefficient values as the table and supplies the coefficient value kd set to "kd0" and the coefficient value kdo set to "kdo0" to the coefficient switching controller 152 from the stored table in response to an inquiry from the coefficient switching controller 152 about the disc information "DVD-R", the mode information "read" and the RF information "presence".

When the tracking error signal is created, sensitivity for detecting the amount of offset of a light spot 195 on the photo detector 194 is dispersed depending on the optical disc 111 and an optical pickup. Therefore, the coefficient values 211 are set as the coefficient values of the tracking correction coefficients that are set according to respective conditions to suppress the dispersion. For example, the coefficient values 211 are composed of the coefficient values of two tracking correction coefficients, that is, the coefficient value kd (for example, kd0, kd1, kd2, Kd3, or the like) and the coefficient value kd0 (for example, kdo0, kdo1, kdo2, kdo3, or the like).

An arithmetic operation unit 201 subtracts the electric signal (C+D) showing the intensity of the reflected light received by the light receiving surface (light receiving regions C and D) on the lower side of the photo detector 194-2 from the electric signal (A+B) showing the intensity of the reflected light received by the light receiving surface (light receiving regions A and B) on the upper side of the photo detector 194-1 based on the electric signals A to D supplied from the respective light receiving regions A to D divided into the four regions of the light receiving surface of the photo detector 194-1 and supplies an electric signal ((A+B)-(C+D)) resulting from the subtraction to a subtraction unit 205.

A subtraction unit 202 subtracts the electric signal C from the electric signal B based on the electric signals B and C supplied from the light receiving regions B and C of the light receiving surface divided into the four regions of the photo detector 194-1 and supplies a resulting electric signal (B-C) to the addition unit 203.

The addition unit 203 adds the electric signal (B-C) and the coefficient value kdo based on the electric signal (B-C) supplied from the subtraction unit 202 and the coefficient value kdo set by the coefficient switching controller 152 and supplies a resulting electric signal (B-C+kdo) to the multiply unit 204.

For example, the addition unit 203 adds the electric signal (B-C) supplied from the subtraction unit 202 and the coefficient value kdo set to "Kdo0" by the coefficient switching controller 152 and supplies a resulting electric signal (B-C+kdo0) to the multiply unit 204.

Here, as described above, the coefficient value kdo set to the addition unit 203 is a coefficient value acquired by the coefficient switching controller 152 from the coefficient register 153 by inquiring of the coefficient register 153 about the coefficient value based on the disc information supplied from the controller 161, the mode information supplied from the gain mode switch unit 162, and the RF information supplied from the RF signal detection unit 151.

The coefficient switching controller 152 acquires the coefficient value kd set to "kd0" and the coefficient value kdo set to "kdo0" from the coefficient register 153 by inquiring of the coefficient register 153 about the coefficient values (coefficient values kd and kdo) based on the disc information "DVD-R" supplied from the controller 161, the mode information "read" supplied from the gain mode switch unit 162, and the RF information "presence" supplied from the RF signal detection unit 151. As a result, the coefficient value kdo set to "kdo0" is set to, for example, the addition unit 203.

Further, when the RF information supplied from the RF signal detection unit 151 to the coefficient switching controller 152 changes from "presence" to "absence", the coefficient switching controller 152 inquires of the coefficient register 153 about the coefficient values (coefficient values kd and kdo) based on the disc information "DVD-R" supplied from the controller 161, the mode information "read" supplied from the gain mode switch unit 162, and the RF information "absence" supplied from the RF signal detection unit 151 and acquires the coefficient value Kd set to "kd1" and the coefficient value kdo set to "kdo1" from the coefficient register 153. As a result, the coefficient value kdo set to "kdo1" is set to, for example, the addition unit 203.

That is, when the RF information changes from "presence" to "absence", the coefficient switching controller 152 also changes the coefficient value kdo set to the addition unit 203 from "kdo0" to "kdo1".

The multiply unit 204 multiplies an electric signal (B-C+kdo) by the coefficient value kd based on the electric signal (B-C+kdo) supplied from the addition unit 203 and the coefficient value kd set by the coefficient switching controller 152 and supplies a resulting electric signal ((B-C+kdo)×kd to the subtraction unit 205.

For example, the multiply unit 204 multiplies the electric signal (B-C+kdo0) by the coefficient value kd set to "kd0" based on the electric signal (B-C+kdo0) supplied from the addition unit 203 and the coefficient value kd set by the coefficient switching controller 152 and supplies a resulting electric signal ((B-C)+kdo0)×kd0 to the subtraction unit 205.

Here, as described above, the coefficient value kd set to the multiply unit 204 is the coefficient value acquired by the coefficient switching controller 152 from the coefficient register 153 by inquiring of the coefficient register 153 about the coefficient value based on the disc information supplied from the controller 161, the mode information supplied from the gain mode switch unit 162, and the RF information supplied from the RF signal detection unit 151.

The coefficient switching controller 152 acquires the coefficient value kd set to "kd0" and the coefficient value kdo set to "kdo0" from the coefficient register 153 by inquiring of the coefficient register 153 about the coefficient values (coefficient values kd and kdo) based on the disc information "DVD-R" supplied from the controller 161, the mode information "read" supplied from the gain mode switch unit 162, and the RF information "presence" supplied from the RF signal detection unit 151. As a result, the coefficient value kd set to "kd0" is set to, for example, the multiply unit 204.

Further, when the RF information supplied from the RF signal detection unit 151 to the coefficient switching controller 152 changes from "presence" to "absence", the coefficient switching controller 152 inquires of the coefficient register 153 about the coefficient values (coefficient values kd and kdo) based on the disc information "DVD-R" supplied from the controller 161, the mode information "read" supplied from the gain mode switch unit 162, and on the RF information "absence" supplied from the RF signal detection unit 151 and acquires the coefficient value Kd set to "kd1" and the coefficient value kd0 set to "kdo1" from the coefficient register 153. As a result, the coefficient value kd set to "kd1" is set to, for example, the multiply unit 204.

That is, when the RF information changes from "presence" to "absence", the coefficient switching controller 152 also changes the coefficient value kd set to the addition unit 203 from "kd0" to "kd1".

The subtraction unit 205 subtracts the electric signal ((B-C)+Kdo)xKd from the electric signal ((A+B)-(C+D)) based on the electric signal ((A+B)-(C+D)) supplied from the arithmetic operation unit 201 and the electric signal ((B-C)+kdo)xkd supplied from the multiply unit 204 and supplies a resulting electric signal ((A+B)-(C+D))-((B-C)+kdo)×kd to the DSP 120 as the tracking error signal.

When, for example, the coefficient value kd set to "kd0" is set to the multiply unit 204 and the coefficient value kdo set to "kdo0" is set to the addition unit 203, the arithmetic operation unit 205 subtracts the electric signal ((B-C)+kdo0)xkd0 from the electric signal ((A+B)-(C+D)) based on the electric signal ((A+B)-(C+D)) supplied from the arithmetic operation unit 201 and the electric signal ((B-C)+kdo0)×kd0 supplied from the multiply unit 204 and supplies a resulting electric signal ((A+B)-(C+D))-((B-C)+kdo0)×kd0 to the DSP 120 as the tracking error signal.

Since the tracking error signal can be created as described above, the coefficient values of the tracking correction coefficients can be controlled to optimum values regardless the presence or absence of the RF signal, thereby the tracking control can be stable and accurately executed.

Further, the tracking error signal created as described above is a tracking error signal that minimizes an offset of tracks with respect to a difference between optical pickups, optical discs, tracking control systems, and the like and to an environment in which attention is paid to reproduce (or record) a signal from or to other optical disc.

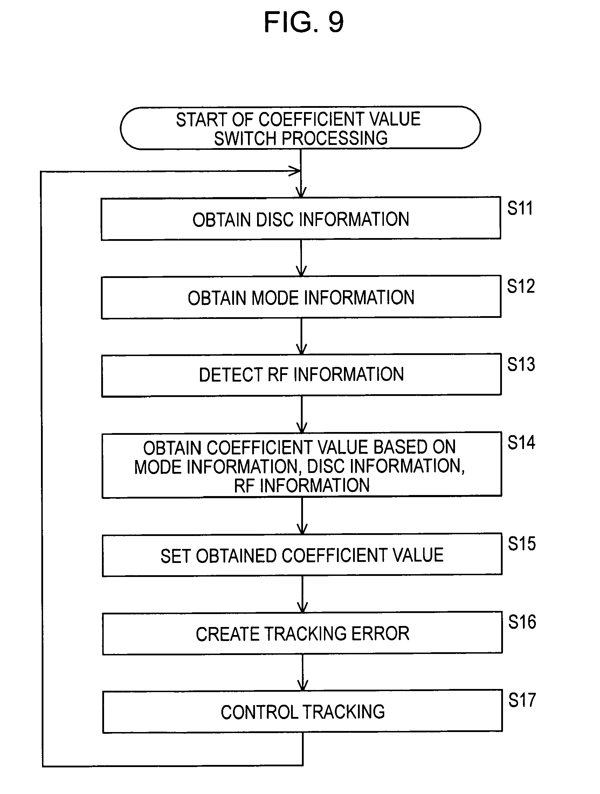

Next, coefficient value switch processing will be explained with reference to a flowchart of Fig. 9.

At step S11, the controller 161 acquires disc information showing a type of the optical disc 111 mounted on the optical disc apparatus 101 and supplies the acquired disc information to the coefficient switching controller 152.

For example, stack tray step S11, the controller 161 acquires the disc information DVD-R as a type of the optical disc 111 mounted on the optical disc apparatus 101 and supplies the acquired disc information "DVD-R" to the coefficient switching controller 152.

At step S12, the gain mode switch unit 162 acquires mode information showing that the mode of the optical disc apparatus 101 is any one of "write" and "read" and supplies the acquired mode information to the coefficient switching controller 152.

When, for example, the mode of the optical disc apparatus 101 is "write" at step S12, the gain mode switch unit 162 supplies the mode information "write" showing that the mode is "write" to the coefficient switching controller 152, whereas when the mode of the optical disc apparatus 101 is "read", the gain mode switch unit 162 supplies the mode information "read" showing that the mode is "read" to the coefficient switching controller 152.

At step S13, the RF signal detection unit 151 detects the RF signal supplied from an RF amplifier 119 and supplies RF information showing whether or not the RF signal is detected to the coefficient switching controller 152.

When, for example, the RF signal detection unit 151 detects the RF signal from the RF amplifier 119 at step S13, it supplies an RF signal "presence" showing that the RF signal is present to the coefficient switching controller 152, whereas when the RF signal detection unit 151 does not detect the RF signal from the RF amplifier 119, it supplies an RF signal "absence" showing that the RF signal is not detected to the coefficient switching controller 152.

At step S14, the coefficient switching controller 152 inquires of the coefficient register 153 about the coefficient values based on the disc information supplied from the controller 161, the mode information supplied from the gain mode switch unit 162, and the RF information supplied from the RF signal detection unit 151 and acquires the coefficient values.

For example, at step S14, the coefficient switching controller 152 inquires of the coefficient register 153 about the coefficient values based on the disc information "DVD-R" supplied from the controller 161, the mode information "read" supplied from the gain mode switch unit 162, and the RF information "presence" supplied from the RF signal detection unit 151.

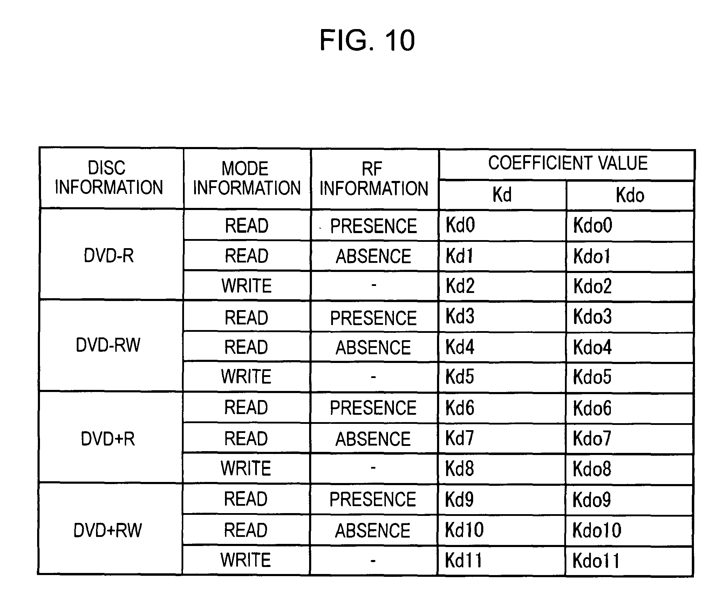

An example of the coefficient values (for example, coefficient values 211) stored in the coefficient register 153 will be explained here with reference to Fig. 10.

In the example of the coefficient values shown in Fig. 10, a first row shows items and second and subsequent rows show data. Further, a first column shows disc information "DVD-R", "DVD-RW", "DVD+R", and "DVD-RW", a second column shows the mode information that is any of "read" and "write", a third column shows the RF information that is any of "presence", "absence" and "-", a fourth column shows the coefficient value kd, and a fifth column shows the coefficient value kdo. Further, in the example of the coefficient values shown in Fig. 10, three patterns of data are stored with respect to the disc information. The three patterns of data stored with respect to the disc information will be explained below as an upper stage, a middle stage, and a lower stage from the top.

The mode information "read", the RF information "presence", the coefficient value kd set to "kd0", and the coefficient value kdo set to "kdo0" are stored in the upper stage to the disc information "DVD-R" of the second row, which shows that the coefficient value kd is set to "kd0 and the coefficient value kdo is set to "kdo0" in the case of the disc information "DVD-R", the mode information "read", and the RF information "presence".

The mode information "read", the RF information "absence", and the coefficient value kd set to "kd1", and the coefficient value kdo set to "kdo1" are stored in the middle stage to the disc information "DVD-R" of the second row, which shows that the coefficient value kd is set to "kd1 and the coefficient value kdo is set to "kdo1" in the case of the disc information "DVD-R", the mode information "read", and the RF information "absence".

Further, the mode information "write", the RF information "-", the coefficient value kd set to "kd2", and the coefficient value kdo set to "kdo2" are stored in the lower stage to the disc information "DVD-R" of the second row, which shows that the coefficient value kd is set to "kd2 and the coefficient value kdo is set to "kdo2" in the case of the disc information "DVD-R", the mode information "read", and the RF information "absence".

The mode information "read", the RF information "presence", the coefficient value kd set to "kd3", and the coefficient value kdo set to "kdo3" are stored in the upper stage with reference to the disc information "DVD-RW" of the third row, which shows that the coefficient value kd is set to "kd3 and the coefficient value kdo is set to "kdo3" in the case of the disc information "DVD-RW", the mode information "read", and the RF information "presence".

Further, the mode information "read", the RF information "absence", the coefficient value kd set to "kd4", and the coefficient value kdo set to "kdo4" are stored in the middle stage to the disc information "DVD-RW" of the third column, which shows that the coefficient value kd is set to "kd4 and the coefficient value kdo is set to "kdo4" in the case of the disc information "DVD-RW", the mode information "read", and the RF information "absence".

Further, the mode information "write", the RF information "-", the coefficient value kd set to "kd5", and the coefficient value kdo set to " kdo5" are stored in the middle stage to the disc information "DVD-RW" of the third row, which shows that the coefficient value kd is set to "kd5 and the coefficient value kdo is set to "kdo5" in the case of the disc information "DVD-RW", the mode information "write", and the RF information "-".

The mode information "read", the RF information "presence", the coefficient value kd set to "kd6", and the coefficient value kdo set to " kdo6" are stored in the upper stage to the disc information "DVD+R" of the fourth row, which shows that the coefficient value kd is set to "kd6 and the coefficient value kdo is set to "kdo6" in the case of the disc information "DVD+R", the mode information "read", and the RF information "presence".

Further, the mode information "read", the RF information "absence", the coefficient value kd set to "kd7", and the coefficient value kdo set to "kdo7" are stored in the middle stage to the disc information "DVD+R" of the fourth row, which shows that the coefficient value kd is set to "kd7 and the coefficient value kdo is set to "kdo7" in the case of the disc information "DVD+R", the mode information "read", and the RF information "absence".

Further, the mode information "write", the RF information "-", the coefficient value kd set to "kd8", and the coefficient value kdo set to "kdo8" are stored in the lower stage to the disc information "DVD+R" of the fourth row, which shows that the coefficient value kd is set to "kd8 and the coefficient value kdo is set to "kdo8" in the case of the disc information "DVD+R", the mode information "write", and the RF information "-".

The mode information "read", the RF information "presence", the coefficient value kd set to "kd9", and the coefficient value kdo set to "kdo9" are stored in the upper stage to the disc information "DVD+RW" of the fifth row, which shows that the coefficient value kd is set to "kd9 and the coefficient value kdo is set to "kdo9" in the case of the disc information "DVD+RW", the mode information "read", and the RF information "presence".

Further, the mode information "read", the RF information "absence", the coefficient value kd set to "kd10", and the coefficient value kdo set to "kdo10" are stored in the middle stage to the disc information "DVD+RW" of the fifth row, which shows that the coefficient value kd is set to "kd10 and the coefficient value kdo is set to "kdo10" in the case of the disc information "DVD+RW", the mode information "read", and the RF information "absence".

Further, the mode information "write", the RF information "-", the coefficient value kd set to "kd11", and the coefficient value kdo set to "kdo11" are stored in the lower stage to the disc information "DVD+RW" of the fifth row, which shows that the coefficient value kd is set to "kd11 and the coefficient value kdo is set to "kdo11" in the case of the disc information "DVD+RW", the mode information "write", and the RF information "-".

Returning to Fig. 9, when, for example, the coefficient switching controller 152 inquires of the coefficient register 153 about the coefficient values at step S14 based on the disc information "DVD-R" supplied from the controller 161, the mode information "read" supplied from the gain mode switch unit 162, and the RF information "presence" supplied from the RF signal detection unit 151, the coefficient switching controller 152 acquires the coefficient values "kd0" and "kdo0" because they agree with the condition stored in the upper stage of the second row of the coefficient value table of Fig. 9.

At step S15, the coefficient switching controller 152 sets the coefficient value kd acquired from the coefficient register 153 to the multiply unit 204 and sets the coefficient value kdo acquired therefrom to the addition unit 203.

For example, at step S15, the coefficient switching controller 152 sets the coefficient value kd acquired from the coefficient register 153 and set to "kd0" to the multiply unit 204 and sets the coefficient value kdo acquired therefrom and set to "kdo0" to the addition unit 203.

At step S16, the servo matrix amplifier 118 creates the tracking error signal for the servo control based on the electric signal supplied from the control pulse 115 as well as the coefficient value kd set to the multiply unit 204 and the coefficient value kdo set to the addition unit 203 by the coefficient switching controller 152, respectively and supplies the created tracking error signal to the DSP 20. The DSP 120 executes, for example, the phase compensation processing or the gain correction processing to the tracking error signal supplied from the servo matrix amplifier 118 and supplies the tracking error signal, to which the phase compensation processing or the gain correction processing is executed, to the drive amplifier 123.

For example, at step S16, the servo matrix amplifier 118 creates the tracking error signal for the servo control based on the electric signal supplied from the light signal amplifier 115 as well as the coefficient value kd set to "kd0" and set to the multiply unit 204 and the coefficient value kdo set to "kdo0" and set to the addition unit 203 by the coefficient switching controller 152, respectively and supplies the created tracking error signal to the DSP 120.

At step S17, the drive amplifier 123 causes the actuator to execute the tracking control based on the tracking error signal supplied from the DSP 120 and returns to step S11 to repeat the processings described above.

At the time, the tracking error signal supplied from the DSP 120 is a tracking error signal that minimizes an offset of tracks with respect to a difference between optical pickups, optical discs, tracking control systems, and the like and to an environment in which attention is paid to reproduce (or record) a signal from or to other optical disc.

Further, the circuit arrangement for creating the tracking error signal by the one-beam method has been explained with reference to Fig. 6. However, the circuit arrangement for creating the tracking error signal by the one-beam method is not limited to the circuit arrangement shown in Fig. 6 described above.

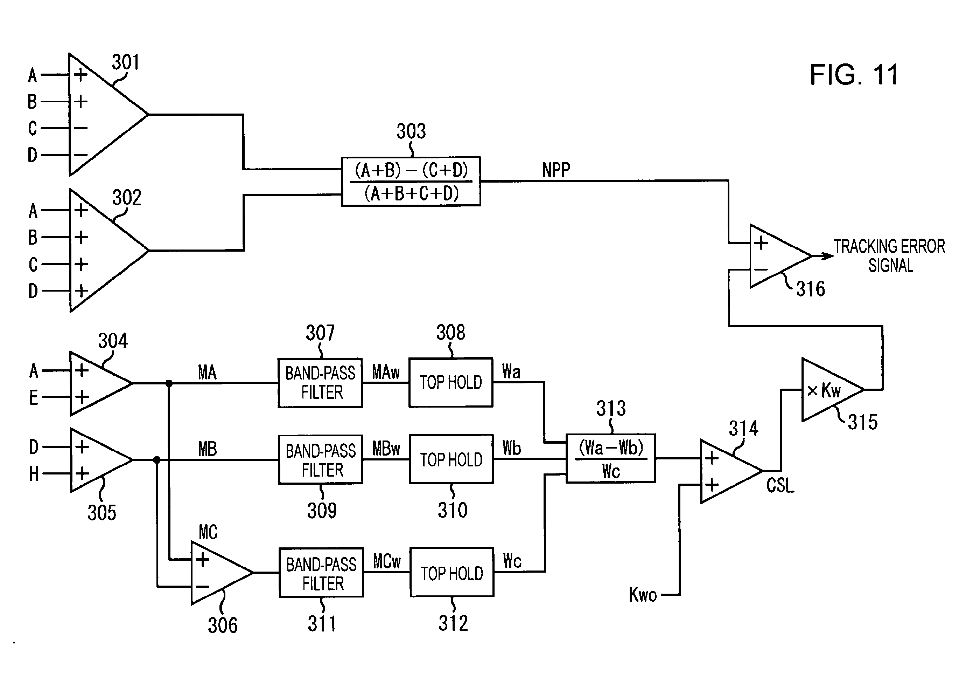

Next, another circuit arrangement for creating the tracking error signal by the one-beam method will be explained with reference to Fig. 11.

Note that when the tracking error signal is created in an example shown in Fig. 11, it is assumed that two coefficient values kw and kwo are set as the coefficient values of the tracking correction coefficients.

An arithmetic operation unit 301 subtracts the electric signal (C+D) showing the intensity of the reflected light received by the light receiving surface (light receiving regions C and D) on the lower side of the photo detector 194-2 from the electric signal (A+B) showing the intensity of the reflected light received by the light receiving surface (light receiving regions A and B) on the upper side of the photo detector 194-1 based on the electric signals A to D supplied from the respective light receiving regions A to D of the light receiving surface divided into the four regions of the photo detector 84-1 and supplies an electric signal ((A+B)-(C+D)) resulting from the subtraction to a division unit 303.

An arithmetic operation unit 302 adds the electric signals from the light receiving surface (light receiving regions A, B, C and D) of the photo detector 194-2 based on the electric signals A to D supplied from the respective light receiving regions A to D of the light receiving surface divided into the four regions of the photo detector 84-1 and supplies an electric signal (A+B+C+D) resulting from the addition to the division unit 303.

The division unit 303 divides the electric signal ((A+B)-(C-D)) by the electric signal (A+B+C+D) based on the electric signal ((A+B)-(C-D)) supplied from the arithmetic operation unit 301 and the electric signal (A+B+C+D) supplied from the arithmetic operation unit 302 and supplies an electric signal NPP set to ((A+B)-(C-D))/(A+B+C+D) resulting from the division to a subtraction unit 316.

An addition unit 304 adds the electric signals A and E based on the electric signal A supplied from the light receiving region A of the light receiving surface divided into the four regions of the photo detector 194-1 and the electric signal E supplied from the light receiving region E of the light receiving surface divided into the four regions of the photo detector 194-2 and supplies an electric signal MA set to (A+E) to a band-pass filter 307 and a subtraction unit 306 as a result of the addition.

An addition unit 305 adds the electric signals D and H based on the electric signal D supplied from the light receiving region D of the light receiving surface divided into the four regions of the photo detector 194-1 and the electric signal H supplied from the light receiving region H of the light receiving surface divided into the four regions of the photo detector 194-2 and supplies an electric signal MB set to (D+H) to a band-pass filter 309 and the subtraction unit 306 as a result of the addition.

The subtraction unit 306 subtracts the electric signal MB from the electric signal MA based on the electric signal MA set to (A+E) and supplied from the addition unit 304 and the electric signal MB set to (D+H) and supplied from the addition unit 305 and supplies an electric signal MC set to ((A+E)-(D+H)) to a band-pass filter 311 as a result of the subtraction.

The band-pass filter 307 causes only a signal, which has a predetermined frequency band included in the electric signal MA, to pass therethrough based on the electric signal MA set to (A+E) and supplied from the addition unit 304 to thereby supply an electric signal MAw, which is made to a signal having the predetermined frequency band, to a top hold 308.

The top hold 308 holds the peak level of the electric signal MAw based on the electric signal MAw supplied from the band-pass filter 307 to thereby supply an electric signal Wa to an arithmetic operation unit 313 as a hold value whose peak value is held.

The band-pass filter 309 causes only a signal, which has a predetermined frequency band included in the electric signal MB, to pass therethrough based on the electric signal MB set to (D+H) and supplied from the addition unit 305 to thereby supply an electric signal MBw, which is made to a signal having the predetermined frequency band, to a top hold 310.

The top hold 310 holds the peak level of the electric signal MBw based on the electric signal MBw supplied from the band-pass filter 309 to thereby supply an electric signal Wb to the arithmetic operation unit 313 as a hold value whose peak value is held.

The band-pass filter 311 causes only a signal, which has a predetermined frequency band included in the electric signal MC, to pass therethrough, based on the electric signal MC set to ((A+E)-(D+H)) and supplied from the subtraction unit 306 to thereby supply an electric signal MCw, which is made to a signal having the predetermined frequency band, to a top hold 312.

A top hold 312 holds the peak level of the electric signal MAw based on the electric signal MCw supplied from the band-pass filter 311 to thereby supply an electric signal Wc to the arithmetic operation unit 313 as a hold value whose peak value is held.

The arithmetic operation unit 313 subtracts the electric signal Wb from the electric signal Wa and divides a result of the subtraction by the electric signal Wc based on the electric signal Wa supplied from the top hold 308, the electric signal WB supplied from the top hold 310, and the electric signal Wc supplied from the top hold 312 and supplies an electric signal (Wa-Wb)/Wc to an addition unit 314 as a result of division of the electric signal Wc.

The addition unit 314 adds the electric signal ((Wa-Wb)/Wc) and the coefficient value kwo set to "kwo" based on the electric signal ((Wa-Wb)/Wc) supplied from the arithmetic operation unit 313 and the coefficient value kwo set to "kwo" by the coefficient switching controller 152 and supplies an electric signal CSL set to ((Wa-Wb)/Wc)+kwo to a multiply unit 315 as a result of the addition.

The multiply unit 315 multiplies the electric signal CSL by the coefficient value kw set to "kw" by the coefficient switching controller 152 based on the electric signal CSL supplied from the addition unit 314 and the coefficient value kw set to "kw" by the coefficient switching controller 152 and supplies an electric signal CSLxkw to a subtraction unit 316 as a result of the multiplication.

The subtraction unit 316 subtracts the electric signal CSLxkw from the electric signal NPP based on the electric signal NPP supplied from the arithmetic operation unit 303 and the electric signal CSLxkw supplied from the multiply unit 315 and creates an electric signal NPP-CSLxkw as the tracking error signal as a result of the subtraction.

As described above, the tracking error signal can be also created by the circuit arrangement of Fig. 11. That is, Fig. 8 is not limited to the circuit arrangement of Fig. 6 and may employ the circuit arrangement of Fig. 11 in place of the circuit arrangement of Fig. 6.

In this case, the coefficient switching controller 152 acquires the coefficient values (coefficient values kw and kwo) from the coefficient register 153 as a result of the inquiry. The coefficient switching controller 152 set the acquired coefficient value kw to the multiply unit 315 and the acquired coefficient value kwo to the addition unit 314.

For example, the coefficient switching controller 152 inquires of the coefficient register 153 about the coefficient values (coefficient values kw and kwo) based on the disc information "DVD-R" supplied from the controller 161, the mode information "read" supplied from the gain mode switch unit 162, and the RF information "presence" supplied from the RF signal detection unit 151. The coefficient switching controller 152 acquires the coefficient value Kw set to "kw0" and the coefficient value kwo set to "Kwo0" from the coefficient register 153. The coefficient switching controller 152 sets the acquired coefficient value kw set to "kw0" to the multiply unit 315 and the acquired coefficient value kwo set to "kwo0" to the addition unit 314.

Since the tracking error signal can be created as described above, the coefficient values of the tracking correction coefficients can be controlled to optimum values regardless the presence or absence of the RF signal, thereby the tracking can be controlled stably and accurately.

Further, the tracking error signal created as described above is a tracking error signal that minimizes an offset of tracks with respect to a difference between optical pickups, optical discs, tracking control systems, and the like and to an environment in which attention is paid to reproduce (or record) a signal from or to other optical disc.

As described above, the tracking can be controlled stably and accurately by controlling the coefficient values of the tracking correction coefficients to optimum values by making use of the RF signal to create the tracking error signal.

Note that when the tracking control as described above is not executed, since the coefficient values are not switched depending on a record/reproduction state and whether or not the RF signal is present, a set of optimum coefficient values may be stored in the coefficient register 153. In this case, when an initial adjustment is executed or when the optical disc 111 is inserted, coefficient values corresponding to the optical disc 111 or a pickup are set as initial values.

Further, the optical disc 111 is not limited to the DVD described above and may be, for example, a CD-R (CD-Recordable), a CD-RW (CD-ReWritable), and the like.

Further, a series of processings described above may be executed by a personal computer.

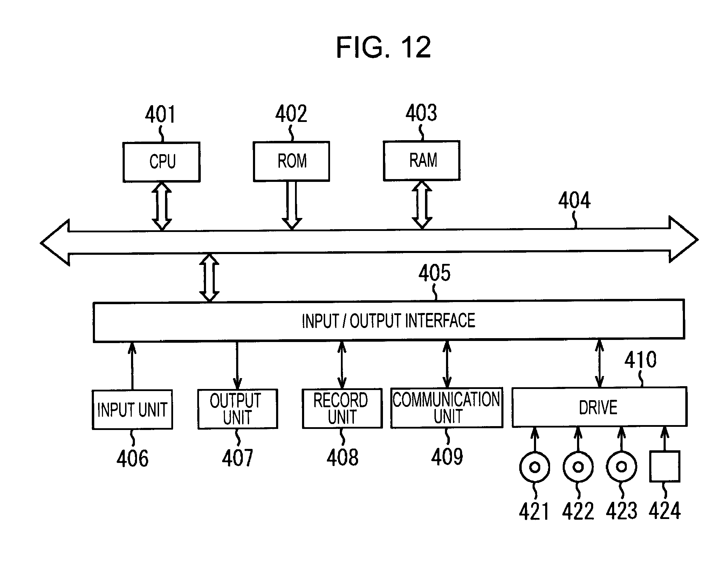

Fig. 12 is a block diagram showing an example of an arrangement of an optical disc apparatus 101 in which a series of the processings described above are executed by the personal computer. A CPU 401 executes various types of processings according to a program recorded in a ROM 402 or a recording unit 408. A RAM 403 appropriately stores a program, data, and the like executed by the CPU 401. These CPU 401, ROM 402, and the RAM 403 are connected to each other through a bus 404.

An input/output interface 405 is also connected to the CPU 401 through the bus 404. An input unit 406, which is composed of a keyboard, mouse, microphone, and the like, and an output unit 407, which is composed of a display, a speaker, and the like, are connected to the input/output interface 405. The CPU 401 executes various types of processings in response to a command input from the input unit 406. Then, the CPU 401 outputs an image and the like acquired as a result of the processings to the output unit 407.

The recording unit 408 connected to the input/output interface 405 is composed of, for example, a hard disc and the like and records the program executed by the CPU 401 and various types of data. A communication unit 409 communicates with an external apparatus through the Internet and other networks. In the case of the example, the communication unit 409 acquires an input image, outputs an output image, or acts as an interface to the outside.

Further, a program may be acquired through the communication unit 409 and recorded to the recording unit 408.

When a magnetic disc 421, an optical disc 422, a magnet-optical disc 423, a semiconductor memory 424, or the like is mounted on a drive 410 connected to the input/output interface 405, the drive 410 drives it and acquires a program, data, and the like recorded thereon. The acquired program and data are transferred and recorded to the recording unit 408 as necessary.

As shown in Fig. 11, the recording medium, in which the program for executing a series of the processings is stored, is composed of a package medium such as the magnetic disc 421 (including flexible disc), the optical disc 422 (CD-ROM (Compact Disc-Read Only Memory) including DVD), the magnet-optical disc 423 (including (MD (Mini-Disc) (Trademark)), the semiconductor memory 424, or the like which are distributed to provide the user with a program, independently of the computer. In addition to the package medium described above, the recording medium is also composed of the ROM 402, which is supplied to the user by being previously assembled to the computer and in which the program is stored, a hard disc included in the memory unit 408, and the like.

Note that the program for executing a series of the processings may be installed on the computer through a wired or wireless communication medium such as a local area network, the Internet, digital satellite broadcasting, and the like through an interface such as a router, modem, or the like as necessary.

Note that, in the specification, the steps that describe the program stored in the recording medium not only include processings executed in the order of description of the steps in a time-series manner but also but also include processings that are not necessarily executed in the time-series manner and executed in parallel with each other or individually.

**Claims**

1. A disc drive apparatus for creating a tracking error signal from reflected light resulting from a laser beam as one beam irradiated onto an optical disc, comprising:

   first acquisition means for acquiring first information as information of a type of the optical disc;
   second acquisition means for acquiring second information showing that the optical disc is operated in any of data write mode and data read mode to the optical disc;
   detection means for detecting an RF (Radio Frequency) signal from the reflected light;
   third acquisition means for acquiring, when the third information, which shows the presence or absence of the RF signal detected by the detection means, changes, one coefficient from a plurality of predetermined coefficients to calculate the tracking signal stored in a storage unit based on the first information, the second information, and the third information; and
   arithmetic operation means for calculating the tracking error signal based on the intensity of the reflected light and the coefficient acquired by the third acquisition means.

2. A disc drive apparatus according to claim 1, wherein when the first information or the second information changes, the third acquisition means acquires one coefficient from a plurality of the coefficients stored in the storage unit based on the first information, the second information, and the third information; and
   the arithmetic operation means calculates the tracking error signal based on the intensity of the reflected light and the coefficient acquired by the third acquisition means.

3. A disc drive apparatus according to claim 1, wherein the first acquisition means acquires the first information that shows any of a DVD-R (Digital Versatile Disk Specifications for Recordable Disc), a DVD-RW (DVD Specifications for Re-recordable Disc), a DVD+R (DVD Specifications for +Recordable Disc), or a DVD+RW (DVD Specifications for +ReWritable Disc) as the type of the optical disc.

4. A disc drive method of driving a disc drive apparatus for creating a tracking error signal from reflected light resulting from a laser beam as one beam irradiated onto an optical disc, comprising:

   a first acquisition step of acquiring first information as information of a type of the optical disc;
   a second acquisition step of acquiring second information showing that the optical disc is operated in any of data write mode and data read mode to the optical disc;
   a detection step of detecting an RF signal from the reflected light;
   a third acquisition step of acquiring, when the third information, which shows the presence or absence of the RF signal detected by the detection means, changes, one coefficient from a plurality of predetermined coefficients to calculate the tracking signal stored in a storage unit based on the first information, the second information, and the third information; and
   an arithmetic operation step of calculating the tracking error signal based on the intensity of the reflected light and the coefficient acquired by the third acquisition means.

5. A recording medium in which a computer readable disc drive program is recorded to create a tracking error signal from reflected light resulting from a laser beam as one beam irradiated onto an optical disc, wherein the program comprises:

   a first acquisition step of acquiring first information as information of a type of the optical disc;
   a second acquisition step of acquiring second information showing that the optical disc is operated in any of data write mode and data read mode to the optical disc;
   a detection step of detecting an RF signal from the reflected light;
   a third acquisition step of acquiring, when the third information, which shows the presence or absence of the RF signal detected by the detection means, changes, one coefficient from a plurality of predetermined coefficients to calculate the tracking signal stored in a storage unit based on the first information, the second information, and the third information; and
   an arithmetic operation step of calculating the tracking error signal based on the intensity of the reflected light and the coefficient acquired by the third acquisition means.

6. A program for causing a computer of a disc drive apparatus to execute disc drive processing, the disc drive apparatus creating a tracking error signal form reflected light resulting from a laser beam as one beam irradiated onto an optical disc, the program comprising:

a first acquisition step of acquiring first information as information of a type of the optical disc;
a second acquisition step of acquiring second information showing that the optical disc is operated in any of data write mode and data read mode to the optical disc;
a detection step of detecting an RF signal from the reflected light;
a third acquisition step of acquiring, when the third information, which shows the presence or absence of the RF signal detected by the detection means, changes, one coefficient from a plurality of predetermined coefficients to calculate the tracking signal stored in a storage unit based on the first information, the second information, and the third information; and
an arithmetic operation step of calculating the tracking error signal based on the intensity of the reflected light and the coefficient acquired by the third acquisition means.

FIG. 1

FIG. 2

EP 1 796 086 A1

DIRECTION OF TRACK

# FIG. 3

FIG. 4

EP 1 796 086 A1

# FIG. 5

EP 1 796 086 A1

# FIG. 6

EP 1 796 086 A1

# FIG. 7A

- - - - - - - - - - - - - - - - - - - - - - - - - - - - - MIRROR

- - - - - - - - - - - - - - - - - - - - - - - - - - - - - PIT

# FIG. 7B

———————————————————————— MIRROR

# FIG. 8

EP 1 796 086 A1

# FIG. 9

START OF COEFFICIENT VALUE
SWITCH PROCESSING

OBTAIN DISC INFORMATION — S11

OBTAIN MODE INFORMATION — S12

DETECT RF INFORMATION — S13

OBTAIN COEFFICIENT VALUE BASED ON
MODE INFORMATION, DISC INFORMATION,
RF INFORMATION — S14

SET OBTAINED COEFFICIENT VALUE — S15

CREATE TRACKING ERROR — S16

CONTROL TRACKING — S17

# FIG. 10

| DISC INFORMATION | MODE INFORMATION | RF INFORMATION | COEFFICIENT VALUE | |
|---|---|---|---|---|
| | | | Kd | Kdo |
| DVD-R | READ | PRESENCE | Kd0 | Kdo0 |
| DVD-R | READ | ABSENCE | Kd1 | Kdo1 |
| DVD-R | WRITE | - | Kd2 | Kdo2 |
| DVD-RW | READ | PRESENCE | Kd3 | Kdo3 |
| DVD-RW | READ | ABSENCE | Kd4 | Kdo4 |
| DVD-RW | WRITE | - | Kd5 | Kdo5 |
| DVD+R | READ | PRESENCE | Kd6 | Kdo6 |
| DVD+R | READ | ABSENCE | Kd7 | Kdo7 |
| DVD+R | WRITE | - | Kd8 | Kdo8 |
| DVD+RW | READ | PRESENCE | Kd9 | Kdo9 |
| DVD+RW | READ | ABSENCE | Kd10 | Kdo10 |
| DVD+RW | WRITE | - | Kd11 | Kdo11 |

EP 1 796 086 A1

FIG. 11

# FIG. 12

EP 1 796 086 A1

<div align="center">**INTERNATIONAL SEARCH REPORT**</div>

| | International application No. |
|---|---|
| | PCT/JP2005/012471 |

**A. CLASSIFICATION OF SUBJECT MATTER**
Int.Cl$^7$ G11B7/09

According to International Patent Classification (IPC) or to both national classification and IPC

**B. FIELDS SEARCHED**

Minimum documentation searched (classification system followed by classification symbols)
Int.Cl$^7$ G11B7/09

Documentation searched other than minimum documentation to the extent that such documents are included in the fields searched
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 11-66579 A (Sony Corp.), 09 March, 1999 (09.03.99), Par. No. [0106]; Fig. 7 (Family: none) | 1-6 |
| A | JP 10-289452 A (Sony Corp.), 27 October, 1998 (27.10.98), Par. No. [0018] (Family: none) | 1-6 |

☐ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 July, 2005 (21.07.05) | 09 August, 2005 (09.08.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**EP 1 796 086 A1**

**REFERENCES CITED IN THE DESCRIPTION**

**Patent documents cited in the description**

- JP 10124891 A